(19) Europäisches Patentamt
European Patent Office
Office européen des brevets

(11) **EP 3 001 427 B1**

(12) **EUROPEAN PATENT SPECIFICATION**

(45) Date of publication and mention
of the grant of the patent:
**23.08.2017 Bulletin 2017/34**

(51) Int Cl.:
*H01B 3/44* (2006.01)       *C08F 214/26* (2006.01)
*C08L 27/18* (2006.01)      *H01B 7/02* (2006.01)
*C09D 127/18* (2006.01)

(21) Application number: **14801106.7**

(22) Date of filing: **19.05.2014**

(86) International application number:
**PCT/JP2014/063244**

(87) International publication number:
**WO 2014/189016 (27.11.2014 Gazette 2014/48)**

(54) **WIRE COATING RESIN MATERIAL AND ELECTRIC WIRE**

DRAHT BESCHICHTUNGSHARZZMATERIAL UND ELEKTRISCHER DRAHT

MATERIAU EN RÉSINE DE REVÊTEMENT POUR FIL ET FIL ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2013 JP 2013107095**

(43) Date of publication of application:
**30.03.2016 Bulletin 2016/13**

(73) Proprietor: **Asahi Glass Company, Limited
Tokyo 100-8405 (JP)**

(72) Inventors:
• **TERADA, Tatsuya
  Tokyo 100-8405 (JP)**

• **NISHI, Eiichi
  Tokyo 100-8405 (JP)**
• **SATO, Takashi
  Tokyo 100-8405 (JP)**

(74) Representative: **Müller-Boré & Partner
Patentanwälte PartG mbB
Friedenheimer Brücke 21
80639 München (DE)**

(56) References cited:
**EP-A1- 2 423 237        WO-A1-2009/096547
WO-A1-2010/123002   JP-A- H0 636 618
JP-A- H0 741 522        JP-A- S6 116 932
JP-A- 2012 021 054      JP-A- 2012 021 054
JP-B2- 3 285 097**

**Description**

TECHNICAL FIELD

The present invention relates to a wire coating resin material comprising an ethylene/tetrafluoroethylene type copolymer (hereinafter referred to an ETFE type copolymer), and an electric wire having a coating layer made of such a wire coating resin material.

BACKGROUND ART

An ETFE type copolymer is excellent in heat resistance, chemical resistance, electrical insulating property, weather resistance, etc. and is used as a wire coating resin material.

However, an electric wire having a coating layer made of an ETFE type copolymer, has such a problem that if the electric wire is held at a high temperature in a bent state, cracking is likely to occur in the coating layer.

As a wire coating resin material capable of forming a coating layer which is less susceptible to cracking even if held at a high temperature in a bent state, the following one has been proposed.

An ETFE type copolymer wherein the content of chlorine atoms is at most 70 ppm, the ratio (molar ratio) of units derived from tetrafluoroethylene/units derived from ethylene is from 40/60 to 70/30, units derived from other units are contained in an amount of from 0.1 to 10 mol% to all units, and the volume flow rate is from 0.01 to 1,000 $mm^3$/sec. (Patent Document 1).

However, even in the case of the ETFE type copolymer in Patent Document 1, there is a problem such that if an electric wire having a coating layer made of the ETFE type copolymer is held at a high temperature and then, bent and held further at a high temperature in a bent state, cracking is likely to occur in the coating layer. JP2012 02154 discloses wire coating material based on a copolymer of tetrafluoroethylene, ethylene and a monomer having two double bonds. Therefore, a coating layer made of an ETFE type copolymer is desired to have such a nature (thermal stress cracking resistance) that cracking is less likely to occur even if an electric wire having the coating layer is held at a high temperature and then, bent and held further at a high temperature in a bent state.

PRIOR ART DOUCMENT

PATENT DOCUMENT

Patent Document: WO2008/069278

DISCLOSURE OF INVENTION

TECHNICAL PROBLEM

The present invention is to provide a wire coating resin material comprising an ETFE type copolymer, which is excellent in thermal stress cracking resistance and has good mechanical properties, and an electric wire having a coating layer which is excellent in thermal stress cracking resistance and has good mechanical properties.

SOLUTION TO PROBLEM

The wire coating resin material of the present invention comprises a resin component (X) composed of at least one type of a copolymer (A) which has units derived from the following monomer (a) and units derived from the following monomer (b), wherein at least one type of the copolymer (A) is a copolymer (A1) which further has units derived from the following monomer (c) or units derived from the following monomer (d) (provided that the following radical generating group would be decomposed and would not remain in the units); the following strain hardening rate of the resin component (X) is from 0.1 to 0.45; and the following melt flow rate of the resin component (X) is from 1 to 200 g/10 min.:

> Monomer (a): tetrafluoroethylene,
> Monomer (b): ethylene,
> Monomer (c): a monomer having at least two polymerizable carbon-carbon double bonds,
> Monomer (d): a monomer having a radical generating group,

Strain hardening rate: a uniaxial elongational viscosity is measured under conditions of a temperature of 270°C and a strain rate $\varepsilon\cdot$ of 1.0 $s^{-1}$, and the strain hardening rate SH is obtained from the following formulae (1) to (3):

$$SH = d\ln\lambda_n(t)/d\varepsilon(t) \qquad (1)$$

$$\lambda_n(t) = \eta_E^+(t)/3\eta(t) \qquad (2)$$

$$\varepsilon(t) = \dot{\varepsilon} \cdot t \qquad (3)$$

wherein SH is the strain hardening rate, ln is a natural logarithm, $\lambda_n(t)$ is a non-linearity parameter, $\eta_E^+(t)$ is an elongational viscosity in a non-linear region, $\eta(t)$ is a linear elongational viscosity obtainable by converting an absolute value of a complex viscosity obtained as a function of $\omega$ by a shear dynamic viscoelasticity measurement under conditions of a temperature of 270°C and an angular frequency $\omega$ of from 0.1 to 100 (rad/s) to a function of time based on t = 1/$\omega$, $\varepsilon(t)$ is a Hencky strain, and t is an elongation time,

Melt flow rate: a mass of the resin component (X) flowing out in 10 minutes from an orifice having a diameter of 2 mm and a length of 8 mm, as measured in accordance with ASTM D-3159 under conditions of a temperature of 297°C and a load of 5 kg.

It is preferred that the resin component (X) is composed of at least two types of the copolymer (A), at least one type of the copolymer (A) is the copolymer (A1), and at least one type of the copolymer (A) is a copolymer (A2) which does not have units derived from the monomer (c) and units derived from the monomer (d).

It is preferred that the resin component (X) is one obtained by mixing

a resin component (X1) obtained by polymerizing a monomer component which comprises the monomer (a), the monomer (b) and the monomer (c), or

a resin component (X2) obtained by polymerizing a monomer component which comprises the monomer (a) and the monomer (b) in the presence of a resin component obtained by polymerizing a monomer component which comprises the monomer (a), the monomer (b) and the monomer (d), and

a copolymer (A2) obtained by polymerizing a monomer component which contains the monomer (a) and the monomer (b) and which does not contain the monomer (c) and the monomer (d).

It is preferred that the monomer (c) is $CH_2=CH-(CF_2)_{n1}-CH=CH_2$ or $CF_2=CF-O-(CF_2)_{n1}-O-CF=CF_2$ (wherein n1 is an integer of from 4 to 8).

It is preferred that the molar ratio ((a)/(b)) of the units derived from the monomer (a) to the units derived from the monomer (b) in the copolymer (A1) is from 20/80 to 80/20.

It is preferred that the copolymer (A1) further has units derived from the following monomer:

$$CH_2=CH(CF_2)n_4F$$

(wherein n4 is an integer of from 2 to 6).

It is preferred that the copolymer (A2) further has units derived from the following monomer:

$$CH_2=CH(CF_2)_{n4}F$$

(wherein n4 is an integer of from 2 to 6).

The resin component (X) may be

a resin component (X1) obtained by polymerizing a monomer component which comprises the monomer (a), the monomer (b) and the monomer (c), or

a resin component (X2) obtained by polymerizing a monomer component which comprises the monomer (a) and the monomer (b) in the presence of a resin component obtained by polymerizing a monomer component which comprises the monomer (a), the monomer (b) and the monomer (d).

The electric wire of the present invention is one having a coating layer made of the wire coating resin material of the present invention.

ADVANTAGEOUS EFFECTS OF INVENTION

By the wire coating resin material of the present invention, it is possible to form a coating layer which is excellent in thermal stress cracking resistance and has good mechanical properties.

The electric wire of the present invention has a coating layer which is excellent in thermal stress cracking resistance and has good mechanical properties.

BRIEF DESCRIPTION OF DRAWINGS

Fig. 1 is a graph showing a relation between an elongation time t and an elongational viscosity $\eta_E^+(t)$ obtainable by uniaxial elongational viscosity measurements.
Fig. 2 is a graph showing a relation between a Hencky strain $\varepsilon(t)$ and a logarithm of non-linearity parameter $\lambda_n(t)$.

DESCRIPTION OF EMBODIMENTS

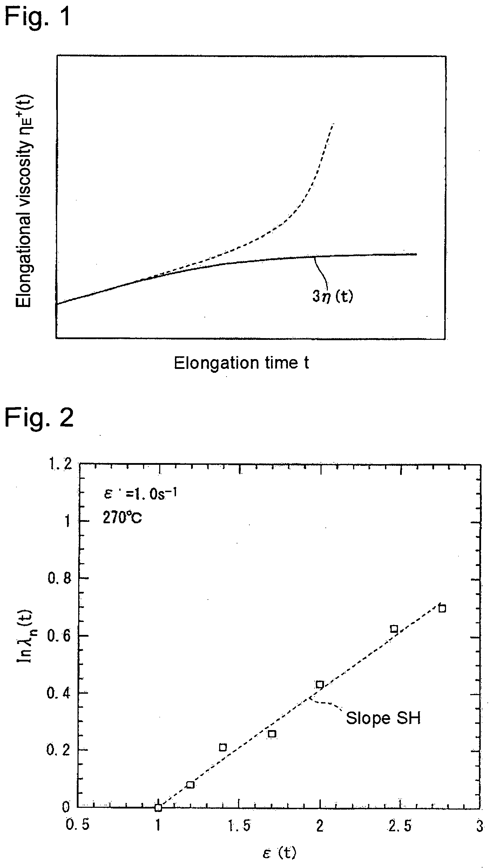

The following definitions of terms apply to this entire specification including claims.
A "monomer" is a compound having a polymerizable carbon-carbon double bond.
"Units derived from a monomer" are constituting units composed of monomer molecules, formed by polymerization of a monomer, wherein part of monomer molecules may have disappeared by decomposition.
A "(meth)acrylate" means an acrylate or a methacrylate.
A "branched structure" means a structure wherein a molecular chain composed of repeated units is branched along the way, and a branch formed of a pendant group being a part of a monomer constituting units is not included in the branched structure.
A "linear region" is, as shown by the solid line in Fig. 1, a region where at the time of measuring the elongational viscosity, the elongational viscosity shows the same time dependency without depending upon the strain rate.
A "non-linear region" is, as shown by the dashed line in Fig. 1, a region where at the time of measuring the elongational viscosity, the elongational viscosity deviates from the linear region and increases with elongation time.
A "strain hardening property" is such a nature that at the time of measuring the elongational viscosity, in a high strain region, the elongational viscosity deviates from the linear region and sharply increases.
A "strain hardening rate SH" is a parameter showing the degree of the strain hardening property. By measuring a uniaxial elongational viscosity under conditions of a temperature of 270°C and a strain rate $\varepsilon\cdot$ of 1.0 s$^{-1}$, the strain hardening rate is obtained from the following formulae (1) to (3):

$$SH = d\ln\lambda_n(t)/d\varepsilon(t) \qquad (1)$$

$$\lambda_n(t) = \eta_E^+(t)/3\eta(t) \qquad (2)$$

$$\varepsilon(t) = \varepsilon\cdot t \qquad (3)$$

wherein SH is the strain hardening rate, ln is a natural logarithm, $\lambda_n(t)$ is a non-linearity parameter, $\eta_E^+(t)$ is an elongational viscosity in a non-linear region, n(t) is a linear elongational viscosity obtainable by converting an absolute value of a complex viscosity obtained as a function of $\omega$ by a shear dynamic viscoelasticity measurement under conditions of a temperature of 270°C and an angular frequency $\omega$ of from 0.1 to 100 (rad/s) to a function of time based on t = 1/$\omega$, $\varepsilon(t)$ is a Hencky strain, and t is an elongation time.
$3\eta(t)$ is an elongational viscosity (the solid line in Fig. 1) in a linear region predictable from a shear dynamic viscoelasticity measurement by plotting values with the abscissa t = 1/$\omega$ and the ordinate $\eta$ being tripled. The non-linearity parameter $\lambda_n(t)$ to be obtained by the formula (2), is a ratio of an elongational viscosity at each time to an elongational viscosity in a linear region predictable from the shear dynamic viscoelasticity measurement.
As shown in Fig. 2, with a resin material having a strain hardening property, it is known that along with the elongation change (i.e. as the elongation time passes), the logarithm of non-linearity parameter $\lambda_n(t)$ increases linearly against the Hencky strain $\varepsilon(t)$. The formula (1) is a formula to obtain the slope of such a linear line, and the larger the slope (i.e. the strain hardening rate SH), the more distinct, the strain hardening property.

<Wire coating resin material>

The wire coating resin material comprises a resin component (X) composed of at least one type of a copolymer (A) which has units derived from the monomer (a) and units derived from the monomer (b) (i.e. an ETFE type copolymer). The wire coating resin material may be one consisting solely of the resin component (X), or one containing the resin component (X) and other components (other resin components, additive components).

(Copolymer (A))

The copolymer (A) is generally classified into the following two types.

Copolymer (A1): a copolymer which has units derived from the monomer (a) and units derived from the monomer (b), and further has units derived from the monomer (c) or units derived from the monomer (d) (provided that the radical generating group would be decomposed and would not remain in the units) (i.e. an ETFE type copolymer having a branched structure).
Copolymer (A2): a copolymer which has units derived from the monomer (a) and units derived from the monomer (b), and does not have units derived from the monomer (c) and units derived from the monomer (d) (i.e. a straight chain ETFE type copolymer having no branched structure).

(Copolymer (A1))

The copolymer (A1) has units derived from the monomer (a) and units derived from the monomer (b), further has units derived from the monomer (c) or units derived from the monomer (d), and, as the case requires, may have units derived from other monomer (e).

Monomer (a):

The monomer (a) is tetrafluoroethylene. As the copolymer (A1) has units derived from the monomer (a), the heat resistance, weather resistance, chemical resistance, gas barrier properties and fuel barrier properties of the coating layer will be good.

Monomer (b):

The monomer (b) is ethylene. As the copolymer (A1) has units derived from the monomer (b), the melt fluidity of the wire coating resin material and the mechanical properties of the coating layer will be good.

Monomer (c):

The monomer (c) is a monomer having at least two polymerizable carbon-carbon double bonds (provided that the monomer (d) is excluded). A unit derived from the monomer (c) will be a branching point of a molecular chain, and therefore, when the copolymer (A1) has units derived from the monomer (c), a branched structure will be introduced to the copolymer (A1).
As the monomer (c), a compound represented by the following formula (4) may be mentioned.

$$Y^1\text{-}R^f\text{-}Z^1 \qquad (4)$$

Here, $R^f$ is a polyfluoroalkylene group, and each of $Y^1$ and $Z^1$ is a vinyl group, a trifluorovinyl group or a trifluorovinyloxy group.
$Y^1$ and $Z^1$ are preferably vinyl groups or trifluorovinyloxy groups, whereby the copolymerizability will be good. $Y^1$ and $Z^1$ are preferably the same from the viewpoint of easy availability.
The following may be mentioned as compounds represented by the formula (4).

$$CH_2=CH\text{-}R^{f1}\text{-}CH=CH_2$$

$$CF_2=CF\text{-}R^{f1}\text{-}CH=CH_2$$

$$CF_2=CF\text{-}R^{f1}\text{-}CF=CF_2$$

$$CF_2=CF\text{-}O\text{-}R^{f1}\text{-}CH=CH_2$$

$$CF_2=CF\text{-}O\text{-}R^{f1}\text{-}CF=CF_2$$

$$CF_2=CF-O-R^{f2}-O-CF=CF_2$$

Here, $R^{f1}$ is a single bond or a $C_{1-8}$ polyfluoroalkylene group, and $R^{f2}$ is a $C_{1-8}$ polyfluoroalkylene group.

$R^f$ is preferably a perfluoroalkylene group, more preferably a $C_{2-8}$ perfluoroalkylene group, since the physical properties of the copolymer (A1) will thereby be good, and from the viewpoint of easy availability, a $C_4$ or $C_6$ perfluoroalkylene group is particularly preferred.

As the monomer (c), the following ones are preferred from the viewpoint of easy availability.

$$CH_2=CH-(CF_2)_{n1}-CH=CH_2$$

$$CF_2=CF-O-(CF_2)_{n1}-O-CF=CF_2$$

Here, n1 is an integer of from 4 to 8.

As the monomer (c), the following one (hereinafter referred to as a monomer (c1)) is particularly preferred.

$$CH_2=CH-(CF_2)_{n2}-CH=CH_2$$

Here, n2 is 4 or 6.

Since the polymerizable carbon-carbon double bonds are vinyl groups, from the polymerizability, the monomer (c) has a high probability to be adjacent to a unit derived from the monomer (a) and a low probability to be adjacent to a unit derived from the monomer (b). Accordingly, the possibility of lining up of a hydrocarbon chain is low, and the copolymer (A1) will be thermally stable.

Monomer (d):

The monomer (d) is a monomer having a radical generating group. A unit derived from the monomer (d) will be a branching point of a molecular chain after decomposition of the radical generating group, and therefore, when the copolymer (A1) has units derived from the monomer (d), a branched structure will be introduced to the copolymer (A1).

The number of polymerizable carbon-carbon double bonds in the monomer (d) is preferably 1 or 2. In a case where the number of polymerizable carbon-carbon double bonds in the monomer (d) is 2, it is preferred that a radical generating group is present between the two polymerizable carbon-carbon double bonds. The number of polymerizable carbon-carbon double bonds in the monomer (d) is more preferably 1. In the case of using the monomer (d) having two polymerizable carbon-carbon double bonds, the amount to be used, is preferably small as compared with the amount to be used, of the monomer (d) having one polymerizable carbon-carbon double bond.

The radical generating group is preferably a group capable of generating radicals by heat, more preferably a peroxy group. The radical generating group generates substantially no radicals under the polymerization conditions in the first step in the method for producing a resin component (X2) which will be described later. Here, "generates substantially no radicals" means that radicals are not generated at all, or even if generated, their amount is very little, and consequently means that no polymerization takes place, or even if polymerization takes place, it presents no influence to the physical properties of the resin component (X2).

The decomposition temperature defined by the 10-hour half-life temperature, of the radical generating group, is preferably from 50 to 200°C, more preferably from 70 to 150°C. The polymerization temperature under the polymerization conditions in the first step and under the polymerization conditions in the second step in the method for producing a resin component (X2) which will be described later, is adjusted depending upon the decomposition temperature of the radical generating group in the selected monomer (d). Accordingly, if the decomposition temperature of the radical generating group is too low, in order to conduct polymerization under the polymerization conditions in the first step, a polymerization initiator having a decomposition temperature further lower than the decomposition temperature of the radical generating group will be required, and the restrictions in the polymerization conditions in the first step become severer. On the other hand, if the decomposition temperature of the radical generating group is too high, the polymerization temperature under the polymerization conditions in the second step will be high, and the restrictions in the polymerization conditions in the second step become severer.

As the monomer (d), the following ones may be mentioned.

An ester of an unsaturated carboxylic acid with an alkyl hydroperoxide,

an alkenyl carbonate of an alkyl hydroperoxide,

a diacyl peroxide having an unsaturated acyl group,

a dialkenyl hydroperoxide,

a dialkenyl dicarbonate, etc.

As the monomer (d), an ester of an unsaturated carboxylic acid with an alkyl hydroperoxide, or an alkenyl carbonate of an alkyl hydroperoxide, is preferred.

As the alkyl hydroperoxide, t-butyl hydroperoxide is preferred.

As the unsaturated carboxylic acid, methacrylic acid, acrylic acid, crotonic acid or maleic acid is preferred.

As the alkenyl group, a vinyl group or an allyl group is preferred.

As specific examples of the monomer (d), t-butylperoxy methacrylate, t-butylperoxy crotonate, t-butylperoxy maleic acid, t-butylperoxy allyl carbonate, etc. may be mentioned.

Monomer (e):

The monomer (e) is a monomer other than the monomer (a), the monomer (b), the monomer (c) and the monomer (d). The copolymer (A1) preferably has units derived from the monomer (e).

As the monomer (e), the following ones may, for example, be mentioned.

A hydrocarbon type olefin: propylene, butane, etc. (provided that ethylene is excluded).

A fluoro-olefin having hydrogen atoms in an unsaturated group: vinylidene fluoride, vinyl fluoride, trifluoroethylene, a compound represented by the following formula (5) (hereinafter referred to as a monomer (e1)), etc.

$$CH_2=CX^2(CF_2)_{n3}Y^2 \qquad (5)$$

Here, each of $X^2$ and $Y^2$ is a hydrogen atom or a fluorine atom, and n3 is an integer of from 2 to 10.

A fluoro-olefin having no hydrogen atom in an unsaturated group: chlorotrifluoroethylene, etc. (provided that tetrafluoroethylene is excluded).

A perfluoro(alkyl vinyl ether): perfluoro(propyl vinyl ether), etc.

A vinyl ether: an alkyl vinyl ether, a (fluoroalkyl) vinyl ether, glycidyl vinyl ether, hydroxybutyl vinyl ether, methyl vinyloxybutyl carbonate, etc.

A vinyl ester: vinyl acetate, vinyl chloroacetate, vinyl butanoate, vinyl pivalate, vinyl benzoate, vinyl crotonate, etc.

A (meth)acrylate: a (polyfluoroalkyl) acrylate, a (polyfluoroalkyl) methacrylate, etc.

An acid anhydride: itaconic anhydride, citraconic anhydride, etc.

As the monomer (e), one type may be used alone, or two or more types may be used in combination.

As the monomer (e), the monomer (e1) is preferred. When the copolymer (A1) has units derived from the monomer (e1), cracking, etc. will be less likely to occur in the coating layer, and the durability of the coating layer will be good.

$X^2$ in the monomer (e1) is preferably a hydrogen atom from the viewpoint of easy availability. $Y^2$ in the monomer (e1) is preferably a fluorine atom from the viewpoint of the thermal stability. From the viewpoint of the physical properties of the copolymer (A1), n3 in the monomer (e1) is preferably an integer of from 2 to 6, more preferably an integer of from 2 to 4.

As specific examples of the monomer (e1), the following ones may be mentioned.

$$CH_2=CF(CF_2)_{n3}F$$

$$CH_2=CF(CF_2)_{n3}H$$

$$CH_2=CH(CF_2)_{n3}F$$

$$CH_2=CH(CF_2)_{n3}H$$

Here, n3 is an integer of from 2 to 10.

As the monomer (e1), the following ones are preferred.

$$CH_2=CF(CF_2)_{n4}F$$

$$CH_2=CH(CF_2)_{n4}F$$

$$CH_2=CH(CF_2)_{n4}H$$

$$CH_2=CF(CF_2)_{n4}H$$

Here, n4 is an integer of from 2 to 6.

As the monomer (e1), the following one is more preferred.

$$CH_2=CH(CF_2)_{n4}F$$

Here, n4 is an integer of from 2 to 6.

As the monomer (e1), the following ones are particularly preferred.

$$CH_2=CH(CF_2)_2F$$

$$CH_2=CH(CF_2)_4F$$

Composition:

The molar ratio ((a)/(b)) of the units derived from the monomer (a) to the units derived from the monomer (b) in the copolymer (A1) is preferably from 20/80 to 80/20, more preferably from 40/60 to 70/30, particularly preferably from 50/50 to 60/40. When (a)/(b) is at least the lower limit value, the heat resistance, weather resistance, chemical resistance, gas barrier properties and fuel barrier properties of the coating layer will be good. When (a)/(b) is at most the upper limit value, the melt fluidity of the wire coating resin material, and the mechanical properties of the coating layer, will be good.

In a case where the copolymer (A1) has units derived from the monomer (c), the proportion of units derived from the monomer (c) may be difficult to measure by a currently available analytical technique, since the amount is very small. The measurement is considered to become possible if units derived from the monomer (c) are present in an amount of at least 0.3 mol% to 100 mol% in total of units derived from the monomer (a) and units derived from the monomer (b). Since the measurement of units derived from the monomer (c) is difficult, the amount of the monomer (c) to be charged at the time of polymerization is to be adjusted while watching the physical properties of the resin component (X1) (containing the copolymer (A1) having units derived from the monomer (c)) obtainable by the production method which will be described later. The amount of the monomer (c) to be charged at the time of polymerization may vary to some extent by the reactivity of the monomer (c), but is preferably from 0.01 to 0.2 mol%, more preferably from 0.03 to 0.15 mol%, to 100 mol% of the total charged amount of the monomer (a) and the monomer (b), in order to make the strain hardening rate to be sufficiently large without substantially changing the properties of the resin component (X1) as compared with the properties of a commercially available conventional ETFE type copolymer. As will be described later, it is possible to adjust the strain hardening rate of the resin component (X) to be within a specified range by using the resin component (X1) having a large strain hardening rate.

In a case where the copolymer (A1) has units derived from the monomer (d), the proportion of units derived from the monomer (d) is preferably from 0.01 to 10 mol% to 100 mol% in total of units derived from the monomer (a) and units derived from the monomer (b). In order to make the strain hardening rate to be sufficiently large without substantially changing the properties of the copolymer (A1) as compared with the properties of a commercially available conventional ETFE type copolymer, in the case of the monomer (d) having one polymerizable carbon-carbon double bond, the proportion is more preferably from 0.01 to 5 mol%, and in the case of the monomer (d) having two polymerizable carbon-carbon double bonds, the proportion is more preferably from 0.01 to 1 mol%. If the proportion of units derived from the monomer (d) is less than the above range, the effect to improve the strain hardening rate of the copolymer (A1) will be small, and if it exceeds the above range, the strain hardening rate of the copolymer (A1) will be too large. Further, as will be described later, it is possible to adjust the strain hardening rate of the resin component (X) to be within a specified range by adjusting e.g. the composition of monomer units in the copolymer (A1).

In a case where the copolymer (A1) has units derived from the monomer (e), the proportion of units derived from the monomer (e) is preferably from 0.01 to 20 mol%, more preferably from 0.05 to 15 mol%, further preferably from 0.1 to 10 mol%, particularly preferably from 0.1 to 7 mol%, to 100 mol% in total of units derived from the monomer (a) and units derived from the monomer (b).

In a case where the copolymer (A1) has units derived from the monomer (e1), the proportion of units derived from the monomer (e1) is preferably from 0.1 to 7 mol%, more preferably from 0.5 to 5 mol%, further preferably from 0.5 to 3.5 mol%, particularly preferably from 0.7 to 3.5 mol%, to 100 mol% in total of units derived from the monomer (a) and units derived from the monomer (b).

When the proportion of units derived from the monomer (e) is at least the lower limit value, stress cracking, etc. will be less likely to occur in the coating layer, and the durability of the coating layer will be good. When the proportion of units derived from the monomer (e) is at most the upper limit value, crystallinity of the copolymer (A1) tends to be high, whereby the melting point of the copolymer (A1) will be sufficiently high, and the hardness of the coating layer will be sufficiently high.

(Copolymer (A2))

The copolymer (A2) has units derived from the monomer (a) and units derived from the monomer (b) and does not have units derived from the monomer (c) and units derived from the monomer (d). It is preferred that the copolymer (A2) further has units derived from the monomer (e).

As the monomer (a), the monomer (b) and the monomer (e), the same ones as exemplified in the copolymer (A1) may be mentioned, and the preferred embodiments of the monomer (a), the monomer (b) and the monomer (e), are also the same as in the copolymer (A1).

The proportions of units derived from the monomer (a), units derived from the monomer (b) and units derived from the monomer (e) are also the same as the proportions in the copolymer (A1), and the preferred proportions are also the same as the preferred proportions in the copolymer (A1).

The melt flow rate of the copolymer (A2) is preferably from 1 to 1,000 g/10 min., more preferably from 3 to 500 g/10 min., particularly preferably from 5 to 300 g/10 min. When the melt flow rate is at least the lower limit value, the melt fluidity of the wire coating resin material will be good. When the melt flow rate is at most the upper limit value, the mechanical properties of the coating layer will be good.

The melt flow rate is an index showing the melt fluidity of the copolymer (A2) and provides an indication of the molecular weight. The larger the melt flow rate, the lower the molecular weight, and the smaller the melt flow rate, the higher the molecular weight. The melt flow rate of the copolymer (A2) is the mass of the copolymer (A2) flowing out in 10 minutes from an orifice having a diameter of 2 mm and a length of 8 mm, as measured in accordance with ASTM D-3159 under conditions of a temperature of 297°C and a load of 5 kg.

(Resin component (X))

The resin component (X) is composed of at least one type of the copolymer (A) (i.e. an ETFE type copolymer), wherein at least one type of the copolymer (A) is a copolymer (A1) (i.e. an ETFE type copolymer having a branched structure). As the resin component (X) contains the copolymer (A1), it is possible to make the strain hardening rate of the resin component (X) to be at least 0.1. The resin component (X) may contain the copolymer (A2) (i.e. a straight chain ETFE type copolymer), as the case requires.

That is, the resin component (X) may be one composed of only one type of the copolymer (A1), one composed of only one type of the copolymer (A1) and only one type of the copolymer (A2), one composed of only one type of the copolymer (A1) and at least two types of the copolymer (A2), one composed of at least two types of the copolymer (A1) and only one type of the copolymer (A2), or one composed of at least two types of the copolymer (A1) and at least two types of the copolymer (A2).

Even by the copolymer (A1) alone, it is possible to bring the strain hardening rate of the resin component (X) to be within the specified range by adjusting the composition of monomer units and/or the length of branches in the copolymer (A1), but it is easier to adjust the strain hardening rate of the resin component (X) to be within the specified range when the copolymer (A1) and the copolymer (A2) are contained. Therefore, it is preferred that the resin component (X) is composed of at least two types of the copolymer (A), wherein at least one type of the copolymer (A) is the copolymer (A1), and at least one type of the copolymer (A) is the copolymer (A2).

The strain hardening rate of the resin component (X) is from 0.1 to 0.45, preferably from 0.2 to 0.45, more preferably from 0.25 to 0.45. When the strain hardening rate of the resin component (X) is at least the lower limit value, the melt moldability of the wire coating resin material will be good, and it is possible to form a coating layer excellent in thermal stress cracking resistance. When the strain hardening rate of the resin component (X) is at most the upper limit value, it is possible to form a coating layer having good mechanical properties.

The strain hardening rate of the resin component (X) is determined by the degree of introduction of the branched structure into the resin component (X). The degree of introduction of the branched structure into the resin component (X) may be adjusted by adjusting the composition of monomer units and/or the length of branches in the copolymer (A1), or by adjusting the ratio of the copolymer (A1) and the copolymer (A2). It is easier to adjust the degree of introduction of the branched structure into the resin component (X) by adjusting the ratio of the copolymer (A1) and the copolymer (A2). Here, it is sometimes difficult to measure the ratio of the copolymer (A1) and the copolymer (A2) contained in the resin component (X) by the currently available analytical technique. Therefore, in practice, the ratio of the copolymer (A1) and the copolymer (A2), i.e. the degree of introduction of the branched structure into the resin component (X), is adjusted so that the strain hardening rate of the resin component (X) becomes to be within the specified range, by e.g. adjusting the production conditions (such as the amounts of monomers to be charged, polymerization conditions, etc.) for the resin component (X1) or the resin component (X2) which will be described later, further mixing the copolymer (A2) to the resin component (X1) or the resin component (X2), etc.

The melt flow rate of the resin component (X) is from 1 to 200 g/10 min., preferably from 5 to 150 g/10 min., more preferably from 10 to 100 g/10 min. When the melt flow rate of the resin component (X) is at least the lower limit value, the melt fluidity of the wire coating resin material will be good. When the melt flow rate of the resin component (X) is at most the upper limit value, it is possible to form a coating layer having good mechanical properties.

The melt flow rate of the resin component (X) is the mass of the resin component (X) flowing out in 10 minutes from an orifice having a diameter of 2 mm and a length of 8 mm, as measured in accordance with ASTM D-3159 under conditions of a temperature of 297°C and a load of 5 kg.

The melt flow rate of the resin component (X) may be adjusted in the same manner as the strain hardening rate of the resin component (X).

(Production methods for resin components (X))

Resin components (X) may generally be classified into the following ones depending upon the production methods.

($\alpha$) a resin component (X1) obtained by polymerizing a monomer component which comprises the monomer (a), the monomer (b) and the monomer (c).

($\beta$) a resin component (X2) obtained by polymerizing a monomer component which comprises the monomer (a) and the monomer (b) in the presence of a resin component obtained by polymerizing a monomer component which comprises the monomer (a), the monomer (b) and the monomer (d).

($\gamma$) a resin component (X) obtained by mixing a resin component (X1) obtained by polymerizing a monomer component which comprises the monomer (a), the monomer (b) and the monomer (c), and a copolymer (A2) obtained by polymerizing a monomer component which contains the monomer (a) and the monomer (b) and does not contain the monomer (c) and the monomer (d).

($\delta$) a resin component (X) obtained by mixing a resin component (X2) obtained by polymerizing a monomer component which comprises the monomer (a) and the monomer (b) in the presence of a resin component obtained by polymerizing a monomer component which comprises the monomer (a), the monomer (b) and the monomer (d), and a copolymer (A2) obtained by polymerizing a monomer component which contains the monomer (a) and the monomer (b) and does not contain the monomer (c) and the monomer (d).

The resin component (X1) can be produced by the production method disclosed in WO2009/096547.

The resin component (X2) can be produced by the production method disclosed in WO2009/096544.

The copolymer (A2) can be produced by a known method for producing an ETFE type copolymer.

By adjusting the production conditions (such as the amounts of monomers to be charged, the polymerization conditions, etc.) for the resin component (X1) or the resin component (X2), it is possible to adjust the strain hardening rate of the resin component (X) to be within the specified range. From such a viewpoint that it is easy to adjust the strain hardening rate of the resin component (X) to be within the specified range, it is preferred that after obtaining the resin component (X1) or the resin component (X2) having a relatively large strain hardening rate (e.g. exceeding 0.45), the copolymer (A2) is mixed thereto to adjust the strain hardening rate of the resin component (X) to be within the specified range. That is, as the resin component (X), the resin component (X) of the above ($\gamma$) or the resin component (X) of the above ($\delta$) is preferred, and from such a viewpoint that the production is easy, the resin component (X) of the above ($\gamma$) is more preferred.

Further, in the resin component (X), preferred amounts (mol%) of the monomer (a) and the monomer (b) charged for polymerization are preferably monomer (a)/monomer (b) = from 4/96 to 98/2, more preferably from 20/80 to 96/4, further preferably from 25/75 to 93/7. When the charged amounts are within such a range, the molar ratio ((a)/(b)) of units derived from the monomer (a) to units derived from the monomer (b) in the copolymer (A1) tends to readily become within the above-mentioned range, whereby the heat resistance, weather resistance, chemical resistance, gas barrier properties and fuel barrier properties of the coating layer will be good, and the melt fluidity of the wire coating resin material and the mechanical properties of the coating layer will be good.

Further, in a case where the resin component (X1) is a resin component obtained by polymerizing a monomer component which contains the monomer (e) in addition to the monomer (a), the monomer (b) and the monomer (c), the preferred charged amount of the monomer (e) is preferably from 0.1 to 7.5 mol%, more preferably from 0.53 to 5.4 mol%, further preferably from 0.53 to 3.75 mol%, particularly preferably from 0.75 to 3.75 mol%, to 100 mol% of the total charged amount of the monomer (a) and the monomer (b). Here, also in a case where as the monomer (e), the monomer (e1) is used, the charged amount is preferably in the above range. When the charged amount is within such a range, in the copolymer (A1), the proportion of the monomer (e) will easily be within the above range to 100 mol% in total of units derived from the monomer (a) and units derived from the monomer (b), whereby stress cracking, etc. will be less likely to occur in the coating layer, and the durability of the coating layer will be good, and at the same time, crystallinity of the copolymer (A1) will be high, so that the melting point of the copolymer (A1) will be sufficiently high and the hardness of the coating layer will be sufficiently high.

(Other components)

The wire coating resin material of the present invention may contain other components within a range not to impair the effects of the present invention.

As such other components, other resin components, other additive components, etc. may be mentioned.

As other resin components, a thermoplastic fluoro-resin other than an ETFE type copolymer, a polyvinylidene fluoride (PVDF), a polychlorotrifluoroethylene (PCTFE), an ethylene/tetrafluoroethylene copolymer (ETFE), an ethylene/chlorotrifluoroethylene copolymer (ECTFE), a tetrafluoroethylene/hexafluoropropylene copolymer (FEP), a tetrafluoroethylene/hexafluoropropylene/vinylidene fluoride copolymer (THV), a tetrafluoroethylene/perfluoro(alkyl vinyl ether) copolymer (PFA), a tetrafluoroethylene/propylene type copolymer, a vinylidene fluoride/chlorotrifluoroethylene type copolymer, a vinylidene fluoride/pentafluoropropene type copolymer, a polyfluoroalkyl group-containing polysiloxane type elastomer, a tetrafluoroethylene/vinylidene fluoride/propylene type copolymer, a tetrafluoroethylene/butane-1 type copolymer, a tetrafluoroethylene/ethyl vinyl ether type copolymer, a fluorinated copolymer such as a fluorinated phosphonitrile type elastomer, etc., may be mentioned.

As other additive components, a pigment, a ultraviolet absorber, a filler, a crosslinking agent, a crosslinking aid, an organic peroxide, etc., may be mentioned.

(Mechanical properties)

MIT of the wire coating resin material is preferably at least 10,000 times, more preferably at least 12,000 times, further preferably at least 15,000 times. When MIT is within such a range, the mechanical properties (particularly the bending resistance) of the coating layer will be good.

MIT is defined as follows.

The wire coating resin material is press-molded at 300°C to obtain a film having a thickness of from 0.220 to 0.236 mm. By stamping the film into a strip shape with a width of 12.5 mm to obtain a specimen for measurement. In accordance with ASTM D2176, bending tests of the specimen are conducted under conditions of a load of 1.25 kg, a bending angle of $\pm 135°$ and a room temperature, using a bending test machine MIT-D (manufactured by Toyo Seiki Seisakusho Company Limited). The number of bending times till breakage is taken as MIT flexing life.

(Advantageous effects)

As described above, the wire coating resin material of the present invention comprises a resin component (X) composed of at least one type of a copolymer (A) which has units derived from the monomer (a) and units derived from the monomer (b), wherein at least one type of the copolymer (A) is a copolymer (A1) which further has units derived from the monomer (c) or units derived from the monomer (d), the strain hardening rate of the resin component (X) is from 0.1 to 0.45, and the melt flow rate of the resin component (X) is from 1 to 200 g/10 min., whereby it is possible to obtain a coating layer which is excellent in thermal stress cracking resistance and has good mechanical properties (such as the bending resistance, etc.).

<Electric wire>

The electric wire of the present invention is one having a coating layer made of the wire coating resin material of the present invention.

The electric wire may, for example, be one obtained by forming a coating layer made of the wire coating resin material on the surface of a core wire.

The material of the core wire may, for example, be copper, a copper alloy, aluminum or an aluminum alloy, and is preferably copper. The core wire may have plating of tin, silver, etc. applied.

The cross-sectional diameter of the core wire is preferably from 10 $\mu$m to 3mm.

The thickness of the coating layer is preferably from 5 $\mu$m to 2mm.

The cross-sectional diameter of the electric wire is preferably from 20 $\mu$m to 5 mm.

The electric wire can be produced by a known method such as a melt extrusion molding method.

As described above, the electric wire of the present invention uses the wire coating resin material of the present invention, whereby the coating layer is excellent in thermal stress cracking resistance, and the mechanical properties (such as the bending resistance, etc.) of the coating layer are good.

EXAMPLES

Now, the present invention will be described in further detail with reference to Examples, but it should be understood that the present invention is by no means restricted by such Examples.

Ex. 3 to 7 are Examples of the present invention, and Ex. 1, 2, 8 and 9 are Comparative Examples.

(Production of resin component (X1))

Into a 100 L pressure container equipped with a stirrer, after deaeration, 90.5 kg of $CF_3(CF_2)_5H$ (hereinafter referred to as C6H), 0.925 kg of methanol, 0.496 kg of $CH_2=CH(CF_2)_4F$ (hereinafter referred to as PFBE) as the monomer (e), 0.030 kg of $CH_2=CH-(CF_2)_6-CH=CH_2$ (hereinafter referred to as the "diene") as the monomer (c), 11.1 kg of tetrafluoroethylene as the monomer (a) and 0.666 kg of ethylene as the monomer (b) were charged at room temperature. Then, the temperature was raised to 66°C, and 77 mL of a 1 mass% solution of t-butyl peroxypivalate (10-hour half-life temperature: 55°C) (solvent: C6H) was charged to initiate polymerization. As the polymerization proceeds, the pressure decreases. Therefore, in order to maintain the pressure to be constant, a mixed gas (tetrafluoroethylene/ethylene = 54/46 molar ratio) was continuously charged. The diene was continuously charged at a ratio corresponding to 0.06 mol% to the mixed gas. At the time when the charged mixed gas amount reached 6.66 kg, the internal temperature was cooled to room temperature, an unreacted gas was released, and the pressure container was opened. The content of the pressure container was washed with C6H, filtrated by a glass filter and dried to obtain 6.81 kg of a resin component (X1-1).

The molar ratio ((a)/(b)) of units derived from the monomer (a) to units derived from the monomer (b) in the resin component (X1-1) (containing a copolymer (A1) having units derived from the monomer (c)) is 54/46; the charged amount of the monomer (c) at the time of polymerization is 0.06 mol% to 100 mol% of the total charged amount of the monomer (a) and the monomer (b); and the proportion of units derived from the monomer (e) is 1.4 mol% to 100 mol% in total of units derived from the monomer (a) and units derived from the monomer (b).

(Production of copolymer (A2))

Into a 100 L pressure container equipped with a stirrer, after deaeration, 90.5 kg of C6H, 0.925 kg of methanol, 0.496 kg of PFBE, 11.1 kg of tetrafluoroethylene and 0.666 kg of ethylene were charged at room temperature. Then, the temperature was raised to 66°C, and 77 mL of a 1 mass% solution of t-butyl peroxypivalate (solvent: C6H) was charged to initiate polymerization. As the polymerization proceeds, the pressure decreases. Therefore, in order to maintain the pressure to be constant, a mixed gas (tetrafluoroethylene/ethylene = 54/46 molar ratio) was continuously charged. At the time when the charged mixed gas amount reached 6.66 kg, the internal temperature was cooled to room temperature, an unreacted gas was released, and the pressure container was opened. The content of the pressure container was washed with C6H, filtrated by a glass filter and dried to obtain 6.74 kg of a copolymer (A2-1). The melt flow rate of the copolymer (A2-1) is 29 g/10 min.

The molar ratio ((a)/(b)) of units derived from the monomer (a) to units derived from the monomer (b) in the copolymer (A2-1) is 54/46; and the proportion of units derived from the monomer (e) is 1.4 mol% to 100 mol% in total of units derived from the monomer (a) and units derived from the monomer (b).

(Ex. 1 to 9)

Using a twin-screw extruder (KZW15TW-45HG1100, manufactured by Technovel Corporation, screw diameter: 15 mm$\phi$, L/D: 45), the resin component (X1-1) and the copolymer (A2-1) in the proportions shown in Table 1, were pelletized under the following conditions to obtain pellets of copolymer (A2) in Ex. 1 and pellets of resin components (X) (i.e. wire coating resin materials) in Ex. 2 to 9.

Temperatures set for cylinders, head and die: C1/C2/C3/C4/C5/C6/D/H = 250/260/270/280/280/280/280/280°C
Material-introducing rate: 4.0 kg/hr.
Screw rotational speed: 200 rpm.

(Uniaxial elongational viscosity)

Using an elongation jig (ARES-EVF) of a strain-controlling type rotary rheometer (ARES, manufactured by TA Instruments), the elongational viscosities $\eta_E^+(t)$ of the copolymer (A2) in Ex.1 and the resin components (X) in Ex. 2 to 9 were measured under conditions of a nitrogen atmosphere, a temperature of 270°C and a strain rate $\varepsilon\cdot$ of 1.0 s$^{-1}$.

(Shear dynamic viscoelasticity)

Using a strain-controlling type rotary rheometer (ARES, manufactured by TA Instruments), the shear dynamic viscoelasticity measurements of the copolymer (A2) in Ex.1 and the resin components (X) in Ex. 2 to 9 were conducted under conditions of a nitrogen atmosphere, a temperature of 270°C, a frequency of from 0.01 to 100 rad/s and a strain within a linear range by a strain sweep test to obtain the absolute values $\eta(t)$ of complex viscosities.

(Hencky strain)

Hencky strain $\varepsilon(t)$ is obtainable by a product of the strain rate $\dot{\varepsilon}$ and the time t.

(Strain hardening rate)

The strain hardening rates SH of the copolymer (A2) in Ex. 1 and the resin components (X) in Ex. 2 to 9 were obtained from the above formulae (1) and (2) based on the elongational viscosities $\eta_E^+(t)$ in the non-linear region obtained by the uniaxial elongational viscosity measurements, the elongational viscosities $3\eta(t)$ in the linear region calculated from the absolute values of complex viscosities obtained by the shear dynamic viscoelasticity measurements and the Hencky strain $\varepsilon(t)$. The results are shown in Table 1.

(Melt flow rate)

Using a melt indexer (manufactured by Technol Seven Co., Ltd.), in accordance with ASTM D-3159, the masses of the copolymer (A2) in Ex. 1 and the resin components (X) in Ex. 2 to 9, flowing out in 10 minutes from an orifice having a diameter of 2 mm and a length of 8 mm, were measured under conditions of a temperature of 297°C and a load of 5 kg. The results are shown in Table 1.

(MIT)

Strip-shaped specimens with a width of 12.5 mm and a thickness of from 0.220 to 0.236 mm made of the copolymer (A2) in Ex.1 and the resin components (X) in Ex. 2 to 9 were prepared, and in accordance with ASTM D-2176, using a bending test machine MIT-D (manufactured by Toyo Seiki Seisakusho Company Limited), the bending tests of the specimens were conducted under conditions of a load of 1.25 kg, a bending angle of $\pm 135°$ and room temperature. The number of bending times till breakage was taken as MIT flexing life.

(Thermal stress cracking resistance)

Plural electric wires were prepared by forming a coating layer of 0.5 mm on a copper core wire with a cross-sectional diameter of 1.8 mm, using the copolymer (A2) in Ex. 1 and the resin components (X) in Ex. 2 to 9, respectively. Each electric wire was heat-treated (hereinafter referred to as "heat treatment A") for 96 hours at each temperature of 180°C, 185°C, 190°C, 195°C, 200°C, 205°C, 210°C and 215°C by an oven. Thereafter, a portion of the electric wire was folded back, and the folded back portion was wound at least 8 times on the electric wire itself and fixed in that state. Each electric wire was further heat-treated at 200°C for one hour in an oven, whereupon the state of the electric wire was confirmed. In the case of conducting heat treatment A at each of the respective temperatures, tests for five electric wires were conducted, and S consisting of the sum of proportions (%) of the number of cracked electric wires to all electric wires, at the respective temperatures, was calculated, whereupon the stress cracking temperature Tb (unit: °C) was calculated from the following formula (6).

$$Tb = Th - \Delta T(S/100 - 1/2) \qquad (6)$$

Here, Th is the highest temperature among the temperatures for heat treatment A where all electric wire underwent cracking, $\Delta T$ is an interval (°C) between the test temperatures for heat treatment A and is 5°C in this Example, and S is the sum of percentages of cracking from the case where the temperature for heat treatment A is lowest among cases where no cracking is observed in all electric wires to the case where the temperature for heat treatment A is Th.

[Table 1]

| Ex. | | 1 | 2 | 3 | 4 | 5 | 6 | 7 | 8 | 9 |
|---|---|---|---|---|---|---|---|---|---|---|
| Resin component (X1-1) | Mass% | 0 | 0.3 | 2 | 4 | 7 | 10 | 15 | 20 | 100 |
| Copolymer (A2-1) | Mass% | 100 | 99.7 | 98 | 96 | 93 | 90 | 85 | 80 | 0 |
| Strain hardening rate SH | - | 0.00 | 0.006 | 0.10 | 0.34 | 0.37 | 0.42 | 0.45 | 0.48 | 0.59 |
| Melt flow rate | g/10 min. | 24.6 | 23.8 | 22.8 | 20.9 | 17.9 | 14.2 | 5.1 | 0.2 | 0.02 |
| MIT | Number of times | 34,652 | 29,086 | 31,305 | 24,145 | 20,024 | 17,511 | 16,270 | 10,347 | 803 |
| Stress cracking temperature | °C | 187 | 187 | 191 | 194 | 195 | 203 | At least 215 | Not moldable | Not moldable |

From the results shown in Table 1, it is evident that the specimens of the resin components (X) (wire coating resin materials) in Ex. 3 to 7 wherein the strain hardening rate is from 0.1 to 0.45, are good in the mechanical property (bending resistance) as compared with the specimens of the resin components (X) (wire coating resin materials) in Ex. 8 and 9 wherein the strain hardening rate exceeds 0.45, although the mechanical property (bending resistance) is low as compared with the specimen of the copolymer (A2) in Ex. 1 or the resin component (X) in Ex. 2 wherein the stress hardening rate is less than 0.1.

Further, it is evident that the coating layers made of the resin components (X) (wire coating resin materials) in Ex. 3 to 7 wherein the strain hardening rate is at least 0.1, are excellent in the stress cracking temperature as compared with the coating layer made of the copolymer (A2) in Ex. 1 or the resin component (X) in Ex. 2 wherein the stress hardening rate is less than 0.1. Further, with the resin components (X) in Ex. 8 and 9, it was not possible to form a coating layer for an electric wire by the melt extrusion molding, since the melt flow rate was too low.

INDUSTRIAL APPLICABILITY

The wire coating resin material of the present invention is useful as a material for a coating layer of electric wires (electric wires for automobiles, industrial robots, etc.) to be used at high temperatures.

**Claims**

1. A wire coating resin material comprising a resin component (X) composed of at least one type of a copolymer (A) which has units derived from the following monomer (a) and units derived from the following monomer (b), wherein at least one type of the copolymer (A) is a copolymer (A1) which further has units derived from the following monomer (c) or units derived from the following monomer (d) (provided that the following radical generating group would be decomposed and would not remain in the units); the following strain hardening rate of the resin component (X) is from 0.1 to 0.45; and the following melt flow rate of the resin component (X) is from 1 to 200 g/10 min.:

   Monomer (a): tetrafluoroethylene,
   Monomer (b): ethylene,
   Monomer (c): a monomer having at least two polymerizable carbon-carbon double bonds,
   Monomer (d): a monomer having a radical generating group,
   Strain hardening rate: a uniaxial elongational viscosity is measured under conditions of a temperature of 270°C and a strain rate $\dot{\varepsilon}$ of 1.0 s$^{-1}$, and the strain hardening rate SH is obtained from the following formulae (1) to (3):

$$SH = d\ln\lambda_n(t)/d\varepsilon(t) \qquad (1)$$

$$\lambda_n(t) = \eta_E^+(t)/3\eta(t) \qquad (2)$$

$$\varepsilon(t) = \dot{\varepsilon}\cdot t \qquad (3)$$

   wherein SH is the strain hardening rate, ln is a natural logarithm, $\lambda_n(t)$ is a non-linearity parameter, $\eta_E^+(t)$ is an elongational viscosity in a non-linear region, n(t) is a linear elongational viscosity obtainable by converting an absolute value of a complex viscosity obtained as a function of $\omega$ by a shear dynamic viscoelasticity measurement under conditions of a temperature of 270°C and an angular frequency $\omega$ of from 0.1 to 100 (rad/s) to a function of time based on t = 1/$\omega$, $\varepsilon(t)$ is a Hencky strain, and t is an elongation time,
   Melt flow rate: a mass of the resin component (X) flowing out in 10 minutes from an orifice having a diameter of 2 mm and a length of 8 mm, as measured in accordance with ASTM D-3159 under conditions of a temperature of 297°C and a load of 5 kg.

2. The wire coating resin material according to Claim 1, wherein the resin component (X) is composed of at least two types of the copolymer (A), at least one type of the copolymer (A) is the copolymer (A1), and at least one type of the copolymer (A) is a copolymer (A2) which does not have units derived from the monomer (c) and units derived from the monomer (d).

3. The wire coating resin material according to Claim 1 or 2, wherein the resin component (X) is one obtained by mixing a resin component (X1) obtained by polymerizing a monomer component which comprises the monomer (a), the monomer (b) and the monomer (c), or a resin component (X2) obtained by polymerizing a monomer component which comprises the monomer (a) and the monomer (b) in the presence of a resin component obtained by polymerizing a monomer component which comprises the monomer (a), the monomer (b) and the monomer (d), and a copolymer (A2) obtained by polymerizing a monomer component which contains the monomer (a) and the monomer (b) and which does not contain the monomer (c) and the monomer (d).

4. The wire coating resin material according to any one of Claims 1 to 3, wherein the monomer (c) is $CH_2=CH-(CF_2)_{n1}-CH=CH_2$ or $CF_2=CF-O-(CF_2)_{n1}-O-CF=CF_2$ (wherein n1 is an integer of from 4 to 8).

5. The wire coating resin material according to any one of Claims 1 to 4, wherein the molar ratio ((a)/(b)) of the units derived from the monomer (a) to the units derived from the monomer (b) in the copolymer (A1) is from 20/80 to 80/20.

6. The wire coating resin material according to any one of Claims 1 to 5, wherein the copolymer (A1) further has units derived from the following monomer:

$$CH_2=CH(CF_2)_{n4}F$$

(wherein n4 is an integer of from 2 to 6).

7. The wire coating resin material according to any one of Claims 2 to 6, wherein the copolymer (A2) further has units derived from the following monomer:

$$CH_2=CH(CF_2)_{n4}F$$

(wherein n4 is an integer of from 2 to 6).

8. The wire coating resin material according to Claim 1 or 2, wherein the resin component (X) is a resin component (X1) obtained by polymerizing a monomer component which comprises the monomer (a), the monomer (b) and the monomer (c), or a resin component (X2) obtained by polymerizing a monomer component which comprises the monomer (a) and the monomer (b) in the presence of a resin component obtained by polymerizing a monomer component which comprises the monomer (a), the monomer (b) and the monomer (d).

9. An electric wire having a coating layer made of the wire coating resin material as defined in any one of Claims 1 to 8.

**Patentansprüche**

1. Drahtbeschichtungsharzmaterial, umfassend eine Harzkomponente (X), zusammengesetzt aus mindestens einer Sorte eines Copolymers (A), welches Einheiten, abgeleitet von dem folgenden Monomer (a), und Einheiten, abgeleitet von dem folgenden Monomer (b), aufweist, wobei mindestens eine Sorte des Copolymers (A) ein Copolymer (A1) ist, welches weiter Einheiten, abgeleitet von dem folgenden Monomer (c) oder Einheiten, abgeleitet von dem folgenden Monomer (d), aufweist (mit der Maßgabe, dass die folgende Radikal-erzeugende Gruppe zersetzt und nicht in den Einheiten verbleiben würde), wobei die folgende Verfestigungsgeschwindigkeit der Harzkomponente (X) 0,1 bis 0,45 beträgt, und der folgende Schmelzindex der Harzkomponente (X) 1 bis 200 g/10 min. beträgt:

Monomer (a): Tetrafluorethylen,
Monomer (b): Ethylen,
Monomer (c): ein Monomer mit mindestens zwei polymerisierbaren Kohlenstoff-Kohlenstoff Doppelbindungen
Monomer (d): ein Monomer mit einer Radikal-erzeugenden Gruppe,

Verfestigungsgeschwindigkeit: eine uniaxiale Dehnviskosität wird gemessen unter Bedingungen einer Temperatur von 270°C und einer Dehngeschwindigkeit $\dot{\varepsilon}$ von 1,0 $s^{-1}$, und die Verfestigungsgeschwindigkeit SH wird durch die folgenden Formeln (1) bis (3) erhalten:

$$SH = d\ln\lambda_n(t)/d\varepsilon(t) \qquad (1)$$

$$\lambda_n(t) = \eta_E^+(t)/3\eta(t) \qquad (2)$$

$$\varepsilon(t) = \varepsilon \cdot t \qquad (3)$$

wobei SH die Verfestigungsgeschwindigkeit ist, In ein natürlicher Logarithmus ist, $\lambda_n(t)$ ein nichtlinearer Parameter ist, $\eta_E^+(t)$ eine Dehnviskosität in einem nichtlinearen Bereich ist, $\eta(t)$ eine lineare Dehnviskosität ist, erhältlich durch Umwandeln eines Absolutwertes einer komplexen Viskosität, welche als eine Funktion von $\omega$ durch eine scherdynamische Viskoelastizitätsmessung unter Bedingungen einer Temperatur von 270°C und einer Winkelfrequenz von 0,1 bis 100 (rad/s), erhalten wird, zu einer Funktion der Zeit basierend auf t = 1/$\omega$, $\varepsilon(t)$ eine Hencky-Dehnung ist, und t eine Dehnungszeit ist,
Schmelzindex: eine Masse der Harzkomponente (X), welche in 10 Minuten aus einer Öffnung mit einem Durchmesser von 2 mm und einer Länge von 8 mm herausfließt, gemessen in Übereinstimmung mit ASTM D-3159 unter Bedingungen einer Temperatur von 297°C und einer Last von 5 kg.

2. Drahtbeschichtungsharzmaterial nach Anspruch 1, wobei die Harzkomponente (X) zusammengesetzt ist aus mindestens zwei Sorten des Copolymers (A), wobei mindestens eine Sorte des Copolymers (A) das Copolymer (A1) ist, und mindestens eine Sorte des Copolymers (A) ein Copolymer (A2) ist, welches keine Einheiten, abgeleitet von dem Monomer (c) und keine Einheiten, abgeleitet von dem Monomer (d), aufweist.

3. Drahtbeschichtungsharzmaterial nach Anspruch 1 oder 2, wobei die Harzkomponente (X) erhalten wird durch Mischen
einer Harzkomponente (X1), erhalten durch Polymerisieren einer Monomerkomponente, welche das Monomer (a), das Monomer (b) und das Monomer (c) umfasst, oder
einer Harzkomponente (X2), erhalten durch Polymerisieren einer Monomerkomponente, welche das Monomer (a) und das Monomer (b) umfasst, in der Gegenwart einer Harzkomponente, erhalten durch Polymerisieren einer Monomerkomponente, welche das Monomer (a), das Monomer (b) und das Monomer (d) umfasst, und
eines Copolymers (A2), erhalten durch Polymerisieren einer Monomerkomponente, welche das Monomer (a) und das Monomer (b) enthält und welche nicht das Monomer (c) und das Monomer (d) enthält.

4. Drahtbeschichtungsharzmaterial nach einem der Ansprüche 1 bis 3, wobei das Monomer (c) $CH_2=CH-(CF_2)_{n1}-CH=CH_2$ oder $CF_2=CF-O-(CF_2)_{n1}-O-CF=CF_2$ ist (wobei n1 eine ganze Zahl von 4 bis 8 ist).

5. Drahtbeschichtungsharzmaterial nach einem der Ansprüche 1 bis 4, wobei das Molverhältnis ((a)/(b)) der Einheiten, abgeleitet von dem Monomer (a), zu den Einheiten, abgeleitet von dem Monomer (b), in dem Copolymer (A1) 20/80 bis 80/20 beträgt.

6. Drahtbeschichtungsharzmaterial nach einem der Ansprüche 1 bis 5, wobei das Copolymer (A1) weiter Einheiten aufweist, abgeleitet von dem folgenden Monomer:

$$CH_2=CH(CF_2)_{n4}F$$

(wobei n4 eine ganze Zahl von 2 bis 6 ist).

7. Drahtbeschichtungsharzmaterial nach einem der Ansprüche 2 bis 6, wobei das Copolymer (A2) weiter Einheiten aufweist, abgeleitet von dem folgenden Monomer:

$$CH_2=CH(CF_2)_{n4}F$$

(wobei n4 eine ganze Zahl von 2 bis 6 ist).

8. Drahtbeschichtungsharzmaterial nach Anspruch 1 oder 2, wobei die Harzkomponente (X)
eine Harzkomponente (X1), erhalten durch Polymerisieren einer Monomerkomponente, welche das Monomer (a), das Monomer (b) und das Monomer (b) umfasst, oder

eine Harzkomponente (X2), erhalten durch Polymerisieren einer Monomerkomponente, welche das Monomer (a) und das Monomer (b) umfasst, in der Gegenwart einer Harzkomponente, erhalten durch Polymerisieren einer Monomerkomponente, welche das Monomer (a), das Monomer (b) und das Monomer, umfasst (d), ist.

9.  Elektrischer Draht, welcher eine Beschichtung aufweist, hergestellt aus dem Drahtbeschichtungsharzmaterial nach einem der Ansprüche 1 bis 8.

**Revendications**

1.  Matériau en résine de revêtement pour fil comprenant un composant résine (X) composé d'au moins un type de copolymère (A) qui présente des motifs dérivés du monomère (a) suivant et des motifs dérivés du monomère (b) suivants, dans lequel au moins un type du copolymère (A) est un copolymère (A1) qui présente en outre des motifs dérivés du monomère (c) suivant ou des motifs dérivés du monomère (d) suivant (sous réserve que le groupe générateur de radicaux suivant soit décomposé et ne reste pas dans les motifs) ; le taux d'écrouissage suivant du composant résine (X) est de 0,1 à 0,45 ; et l'indice de fluage suivant du composant résine (X) est de 1 à 200 g/10 min :

    monomère (a) : tétrafluoroéthylène
    monomère (b) : éthylène,
    monomère (c) : un monomère comportant au moins deux doubles liaisons carbone-carbone polymérisables,
    monomère (d) : un monomère comportant un groupe générateur de radicaux,
    taux d'écrouissage : la viscosité en allongement uniaxiale est mesurée dans des conditions de température de 270°C et à une vitesse de contrainte ε de 1,0 s$^{-1}$, et le taux d'écrouissage SH est obtenu par les formules (1) à (3) suivantes :

$$SH = dln\lambda_n(t)/d\varepsilon(t) \qquad (1)$$

$$\lambda_n(t) = \eta_E^+(t)/3\eta(t) \qquad (2)$$

$$\varepsilon(t) = \varepsilon \bullet t \qquad (3)$$

    où SH est le taux d'écrouissage, ln est le logarithme naturel, $\lambda_n(t)$ est un paramètre de non linéarité, $\eta_E^+(t)$ est la viscosité en allongement dans une région non linéaire, $\eta(t)$ est la viscosité en allongement linéaire pouvant être obtenue par conversion de la valeur absolue de la viscosité complexe, obtenue en fonction de ω par une mesure de viscoélasticité dynamique sous cisaillement dans des conditions de température de 270°C et à une fréquence angulaire ω de 0,1 à 100 (rad/s), en une fonction temporelle basée sur t = 1/ω, ε(t) est la déformation de Hencky, et t est le temps d'allongement,
    indice de fluage : la masse de composant résine (X) s'écoulant en 10 minutes par un orifice présentant un diamètre de 2 mm et une longueur de 8 mm, comme mesuré conformément à la norme ASTM D-3159 dans des conditions de température de 297°C et sous une charge de 5 kg.

2.  Matériau en résine de revêtement pour fil selon la revendication 1, dans lequel le composant résine (X) est composé d'au moins deux types du copolymère (A), au moins un type du copolymère (A) étant le copolymère (A1) et au moins un type du copolymère (A) étant un copolymère (A2) qui ne présente pas de motifs dérivés du monomère (c) et de motifs dérivés du monomère (d).

3.  Matériau en résine de revêtement pour fil selon la revendication 1 ou 2, dans lequel le composant résine (X) est obtenu par mélange
    d'un composant résine (X1) obtenu par polymérisation d'un composant monomère qui comprend le monomère (a), le monomère (b) et le monomère (c), ou
    d'un composé résine (X2) obtenu par polymérisation d'un composant monomère qui comprend le monomère (a) et le monomère (b) en présence d'un composant résine obtenu par polymérisation d'un composant monomère qui comprend le monomère (a), le monomère (b) et le monomère (d), et
d'un copolymère (A2) obtenu par polymérisation d'un composant monomère qui contient le monomère (a) et le monomère (b) et qui ne contient pas le monomère (c) et le monomère (d).

4. Matériau en résine de revêtement pour fil selon l'une quelconque des revendications 1 à 3, dans lequel le monomère (c) est $CH_2=CH-(CF_2)_{n1}-CH=CH_2$ ou $CF_2=CF-O-(CF_2)_{n1}-O-CF=CF_2$ (où n1 est un entier de 4 à 8).

5. Matériau en résine de revêtement pour fil selon l'une quelconque des revendications 1 à 4, dans lequel le rapport molaire ((a)/(b)) des motifs dérivés du monomère (a) sur les motifs dérivés du monomère (b) dans le copolymère (A1) est de 20/80 à 80/20.

6. Matériau en résine de revêtement pour fil selon l'une quelconque des revendications 1 à 5, dans lequel le copolymère (A1) présente en outre des motifs dérivés du monomère suivant :

$$CH_2=CH(CF_2)_{n4}F \text{ (où n4 est un entier de 2 à 6).}$$

7. Matériau en résine de revêtement pour fil selon l'une quelconque des revendications 2 à 6, dans lequel le copolymère (A2) présente en outre des motifs dérivés du monomère suivant :

$$CH_2=CH(CF_2)_{n4}F \text{ (où n4 est un entier de 2 à 6).}$$

8. Matériau en résine de revêtement pour fil selon la revendication 1 ou 2, dans laquelle le composant résine (X) est un composant résine (X1) obtenu par polymérisation d'un composant monomère qui comprend le monomère (a), le monomère (b) et le monomère (c), ou
un composant résine (X2) obtenu par polymérisation d'un composant monomère qui comprend le monomère (a) et le monomère (b) en présence d'un composant résine obtenu par polymérisation d'un composant monomère qui comprend le monomère (a), le monomère (b) et le monomère (d).

9. Fil électrique ayant une couche de revêtement faite du matériau en résine de revêtement pour fil tel que défini dans l'une quelconque des revendications 1 à 8.

## Fig. 1

## Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012002154 A
- WO 2008069278 A
- WO 2009096547 A
- WO 2009096544 A